# EUROPEAN PATENT SPECIFICATION

(11) **EP 2 511 082 B1**
(45) Date of publication and mention of the grant of the patent: **14.05.2014**
(21) Application number: 12163763.1
(22) Date of filing: 11.04.2012
(51) Int. Cl.: B29C 70/46, B29C 70/86

(54) **Method for manufacturing products made of composite material with a closed-section sandwich structure**
Verfahren zur Herstellung von Produkten aus Verbundstoffmaterial mit einer Sandwich-Struktur mit geschlossenem Abschnitt
Procédé de fabrication de produits fabriqués en matériau composite avec une structure en sandwich à section fermée

(30) Priority: 12.04.2011 IT TO20110332
(43) Date of publication of application: 17.10.2012
(73) Proprietor: Alenia Aermacchi S.p.A., 21040 Venegono Superiore (Varese) (IT)
(72) Inventor: Pitzolu, Ruggero, I-63078 SPINETOLI (Ascoli Piceno) (IT)
(74) Representative: Fioravanti, Corrado

(56) References cited:
- GB-A- 1 185 510
- US-A- 6 159 414

## Description

The present invention relates to the manufacture of products with a closed-section sandwich structure, comprising a core of lightweight material surrounded by a shell or skin of composite material, typically carboresin. The invention is intended to be used, in particular but not exclusively, in the aircraft construction sector, for example for the manufacture of moving surfaces such as tail units or fuselage parts and panelling in general of varying shape and size. More generally, the invention is applicable to any sector (for example the motor vehicle industry) where there is a need to have rigid and light structural parts.

In the applications most widely used hitherto, the core is formed by one or more parts made of honeycomb material. The manufacturing method starts with lamination of a layer of curable, fibre-reinforced, thermosetting composite material in an uncured condition; this first layer, which is intended to form a part of the outer shell of the product, is laminated on a lower forming tool of a matched mould curing apparatus formed so as to impart a predefined form to the composite layer. Then a block, not yet shaped, of honeycomb material is glued on top of the laminated layer and the assembly is transferred into an autoclave so as to perform curing of the bottom layer of composite material. Once curing has been performed, the body comprising the honeycomb material and the cured layer is transferred to a 5-axis numerical control machining unit which machines the surface of the honeycomb material which is still exposed, providing it with a predefined form. The body is then repositioned on the lower forming tool and a second layer of fibre-reinforced thermosetting composite material is laminated in an uncured condition on the surface of the honeycomb block which has just been machined. An upper forming tool of the curing apparatus is closed on top of the second laminated layer and a second curing cycle is performed inside the autoclave. Depending on the complexity of the core form, further machining operations may be required, followed by corresponding transfer into an autoclave for further curing cycles.

GB 1 185 510 discloses a method of manufacturing a rotor blade having a glass fibre reinforced synthetic plastics shell surrounding a rigid foamed or expanded plastics core. The method comprises providing a matched mould apparatus defining a moulding cavity and comprising a lower forming tool and an upper forming tool. The rotor blade is formed from shell halves made of glass fibre reinforced synthetic plastics, each fitted on one of the two forming tools. The plastics core, initially oversized, is fitted between the shell halves, leaving a gap between the upper and lower forming tools. The forming tools are heated by means of electrical heating wires, causing the core to soften, allowing the mould to close. An edge of the core is provided with a synthetic resin impregnated layer of reinforcement fabric.

The object of the invention is to manufacture products of the type discussed above in a simple, rapid and low-cost manner, using equipment which is less costly than that conventionally used. In particular the aim is to provide products with a very precise shape and size, but without having to make use of large-size numerical control machines which are disadvantageous from a cost point of view. The aim is also to simplify the handling and transfer operations within the production plant.

This object, together with other objects and advantages, which will be understood more clearly below, are achieved according to the invention by a method as defined in the accompanying claims.

A preferred, but non-limiting embodiment of the method according to the invention will now be described with reference to the accompanying drawings in which:
Figure 1 is a schematic horizontally sectioned view of a matched mould curing apparatus in the closed condition for moulding in an autoclave the composite shell of a product having a core made of lightweight material;
Figure 2 is a schematic cross-sectional view, on a larger scale, along the line II-II of Figure 1; and
Figure 3 is a schematic perspective view of a step for cutting a block of lightweight material in order to obtain one of the segments forming the core of the product according to Figures 1 and 2.

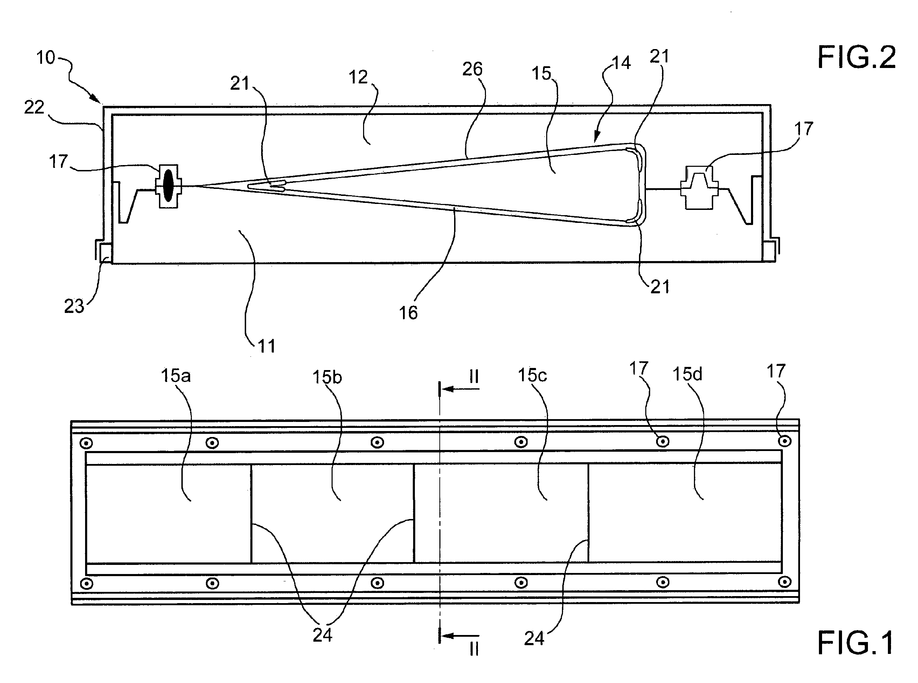

With reference initially to Figures 1 and 2, 10 denotes a curing apparatus, of the type known per se, comprising a lower mould 11 and an upper countermould 12 (the two moulds being known per se as "matched mould") which together define a moulding cavity able to impart a given final external form to a product or a structural part 14 by means of simultaneous application of pressure and temperature, in particular, but not exclusively, inside an autoclave. The structural part 14, in this example a control surface of an aircraft, has a closed-section sandwich structure with a lightweight foam core 15 which is surrounded by a shell or skin 16 of carboresin or other curable, fibre-reinforced, thermosetting composite material, irrespective of whether it is of the long or short type.

In a first step of the method a series of superimposed layers or skins of fresh composite material 16 is laminated on the lower tool 11, by depositing for example in succession unidirectional fabrics or fibres (typically carbon fibres) preimpregnated with uncured thermosetting resin, in accordance with known methods which do not have to be described in detail here.

In order to produce the core 15, a plurality of consecutive core segments 15a-15d are provided and placed adjacent to one another in a direction "x" which is defined here as being longitudinal, on top of the fresh bottom layer 16. In the whole of the present description and in the claims the terms and expressions indicating positions and directions, such as "longitudinal" and "transverse" are to be understood as referring to the direction "x". Expressions such as "internal", "external", "upper" or "lower" instead relate to the moulding apparatus.

In other words, the core 15 is divided up into and formed by the set of core segments 15a-15d which have in this example the form of prism blocks aligned in the direction "x". The desired form is imparted to the core segments by cutting the blocks (in this case parallelepipeds) of closed-cell foam. By way of example the following materials may be regarded as suitable for this purpose: Klegecell® TR or Divinycell® HT made by the company DIAB or alternatively Rohacell Type A or WF.

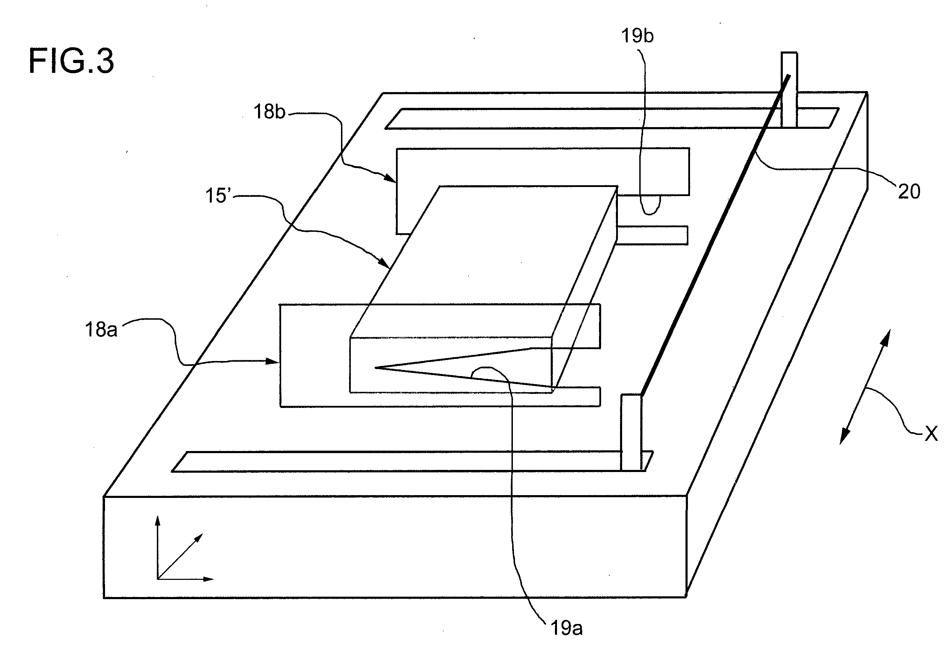

One of these blocks of foam, in this example having a parallelepiped shape, is denoted by 15' in Figure 3. In order to perform cutting of the block it is convenient to use a tool with a diamond-coated, thin, round, taut wire 20. Alternatively, depending on the type of pre-selected foam, it may be preferable to use a hot-wire cutting tool.

The blocks 15' are obtained from an initial block (not shown) which is thus divided up initially into several blocks 15' each having a predefined maximum dimension depending on the product to be made; advantageously dimensions are chosen such as to ensure the divided configuration defined during the design stage and facilitate handling and manual transportation of the individual blocks. Each block 15' (Figure 3) is held between a pair of lateral templates 18a, 18b which each reproduce the profile or shape 19a, 19b of the two respective ends of the core segments.

The templates also act as control guides for tracing cutting of the blocks so as to provide them with a shape corresponding to that of a portion of the moulding cavity, situated between the lower tool and the upper tool. The diamond-coated wire which performs the cut vibrates alternately in a direction perpendicular to the templates and therefore in a direction substantially parallel to the longitudinal direction "x" of the core.

The profiles 19a, 19b of the templates 18a, 18b have dimensions which are slightly greater in relation to the predefined nominal dimensions, i.e. the free space inside the moulding cavity defined between the parts 11 and 12 of the matched mould apparatus 10. In other words, the templates 18a, 18b define contours (or shapes or profiles) 19a, 19b having forms corresponding to cross-sections of the moulding cavity, but dimensions slightly greater than the so-called "net trim" and moulding cavity, as indicated hereinbelow.

The extent of the greater dimensions or oversizing of the core segments with respect to the mould depends on a series of factors, first and foremost the type of foam, its density and its softening point. This latter expression is understood as referring to the "mouldability" temperature, i.e. the nominal temperature at which each type of foam may be plastically deformed. It is also necessary to take into account the size of the mould considered in the opening and closing direction, the temperature and the curing pressure of the autoclave. The margin or excess layer of the core segments may be equally well provided on the upper side or on the lower side of the segments or on both sides. Preliminary studies carried out by the Applicant have shown that excellent results, in terms of precision of the finished product, may be obtained if the core segments are oversized, when considered in planes transverse or perpendicular to the direction "x", by about 0.2-1.5 mm with respect to the so-called "net trim". This latter expression indicates the nominal size determined by the moulding cavity in the closed condition, minus the thickness of the layers of composite material surrounding the core. The invention is not limited to the abovementioned specific and optimum range.

The core segments 15a-15d are then coated with a layer 21 of expansion adhesive on the corner edges (using methods known per se), on the thinner zones and on the surfaces which face adjacent segments. The expansion adhesive has the function of ensuring that in all the zones of the moulding cavity the pressure of the material is substantially uniform and in any case adequate and also making sure that any gaps or voids (for example owing to breakages in the thinner peripheral zones of the core) are filled with material, so as to obtain the final form of the product in accordance with the design requirements. Also the cavities between two consecutive segments are filled with expansion adhesive which, once hardening has taken place, will give rise to longitudinally spaced transverse partitions 24. For example, the products SynSpand 9899 and SynSpand 9890 commercially distributed by the company Henkel may be used as expansion resins.

According to a preferred embodiment, the core segments are deposited on the lower tool, bringing it into contact with a part of the segments which has not been oversized or oversizing of which is minimal compared to the other sides. In this way the segments are able to rest better inside the mould on a side where any imperfect fit between the surfaces of two adjacent segments is minimal.

At the same time as or after lamination of the composite material 16 on the lower tool, a series of superimposed layers or skins of composite material 26 comprising curable fibre-reinforced thermosetting resin in an uncured condition is also laminated on the upper tool 12 using the same methods adopted for the bottom layers.

Therefore, after positioning in the lower mould or tool 11 the core segments suitably coated with expansion adhesive, the upper mould 12 with the upper laminated layers 26 is placed on top of the core segments. The different parts of the matched mould apparatus are joined together precisely by means of tapered centring pins 17. Owing to the abovementioned oversizing, the mould cannot be fully closed and fitted together at this stage.

A vacuum bag 22 with a peripheral sealing tape 23 is then applied in a manner conventional per se and the mould is placed inside an autoclave for curing. Advantageously, a single curing cycle is performed so as to produce curing of the entire shell of composite material and therefore both of the top part and of the bottom part. The use of an autoclave is not indispensable for the application of the temperatures and pressures necessary for curing; the method may be equally well implemented using heatable moulds placed underneath a press.

The curing cycle must go through a series of predefined steps depending on the type of foam. Initially a heating step without the application of pressure is performed. The heating step envisages suitable heat gradient ramps (e.g. 5°C/min) up to a temperature close to a temperature value not less than 75% and not greater than 100% of the so-called softening point (or "mouldability" temperature) which depends on the type of foam. In general the ramp must be sufficiently slow so as not to damage the foam or cause premature curing of the resin.

When the abovementioned softening (or mouldable) condition of the core is reached, a step follows where the temperature is kept constant, with the controlled application of pressure regulated by the autoclave with a ramp for example of 1 bar/every 5 minutes until a predetermined constant pressure, for example of 2-10 bar, is reached on the basis of the mechanical properties of the foam forming the core. The pressure applied gradually during this step causes a plastic deformation of the foam, with a consequent increase in density of the core segments, in particular in the zones where the segments have larger dimensions.

The same pressure exerted by the autoclave, or by the press acting on the curing apparatus, causes closing of the mould.

This is followed by a pause at a substantially constant temperature and pressure so as to allow curing of the resin. Finally, cooling may be performed with a preferably slow ramp (for example for 1°C/min) until two-thirds of the softening point of the foam is reached. The choice of the resin and the adhesives to be used must be related to the type of foam so that the resin has a degree of viscosity which allows it to be worked when the foam softening temperature is reached. In other words, the gel time of the resin must be greater than the time which the foam requires in order to reach its softening point, or at least close to 70-80% thereof, so that the resin is not prematurely cured. Different types of foam and resin require in each case a different and appropriate application of the pressure and temperature values.

As can be appreciated, the method allows the manufacture of products with a high degree of dimensional precision without using costly numerical-control apparatus, but making use of the mouldable nature of the material forming the core in order to obtain the desired geometrical form precisely determined by the mould and countermould of the curing apparatus.

With respect to the prior art which uses numerical-control machines for manufacture of the core, with the present invention it is possible to achieve a considerable reduction in the amount of time required since it is no longer required to perform long and costly dimensional checks at the end of manufacture of the core.

If an autoclave is to be used, the method requires a single autoclave step, thereby minimizing the transfer operations within the industrial plant.

The division of the core into segments with a manageable size facilitates the work for operators and dispenses with the need for special equipment in order to move conventional bulky single-piece cores within the plant. For example, an aircraft tail unit with a length of at least 5 metres may be prepared by assembling core segments, each with a length of about 0.5 metre. Trial tests carried out show that with the invention it is possible to reduce the amount of time required by about 40% compared to a conventional process of the type mentioned in the introduction.

The increase in density which is obtained in the core zones which are initially oversized results in an increase in the mechanical properties of the core which advantageously will be more rigid in the peripheral zones immediately adjacent to the shell of composite material. These zones, at the interface with the outer layers of composite material, are in fact the parts of the core which are most exposed to shearing forces. Their reinforcement therefore increases the overall structural strength of the product.

A further advantage provided by the present invention consists in the fact that a particularly high precision is not required to perform the cutting of blocks in order to obtain the core segments. More particularly, it is not indispensable for the increased dimensions or oversizing of the core segments to be constant or uniform in the whole of their peripheral zone. Owing to the fact that the core segments must be formed (and therefore cut) oversized, any core segments cut in such a way that they exceed locally the predefined oversizing may also be used without the need for further machining, since the foam in excess of the nominal dimensions is eliminated by making use of the capacity of the foam to be plastically deformed under the action of the pressure and temperature applied. Cutting of the core segments may be advantageously performed in a relatively approximate manner, rapidly and with the aid of apparatus which are considerably less costly than those used hitherto, as discussed in the introductory part of the present description.

In order to prevent the core segments from being cut with superficial zones having dimensions smaller than the nominal dimensions, it is sufficient to choose a cutting machine with a tolerance less than the oversizing which is predetermined depending on the type of foam.

It is understood that the invention is not limited to the particular embodiment described and illustrated here, which is to be regarded as an example of production. The invention may be subject to modification in terms of forms, dimensions, arrangement of parts, materials used and methods of application of the temperature and pressure in an autoclave, so as to manufacture virtually any product with a closed-section sandwich structure having a core of lightweight material surrounded by a shell of composite material. For example, splitting of the core, i.e. its subdivision into a greater (or smaller) number of segments which are smaller (or larger) in length, may vary depending on the form and dimensions of the core, its complexity, its variation along the direction "x", and the degree of dimensional precision to be achieved. Various pairs of templates with corresponding shapes may be provided in order to cut core segments in accordance with particular design requirements. Finally, depending on the form and dimensions of the product, the core segments may be arranged adjacent to one another in more than one predetermined direction, for example in the form of two or more groups of parallel straight lines, for example in a grid arrangement.

## Claims

1. Method for manufacturing a product with a closed-section sandwich structure, comprising a core (15) of lightweight material surrounded by a shell of composite material, the method comprising the following steps:
- providing a matched mould curing apparatus (10) defining a moulding cavity and comprising at least a lower forming tool (11) and at least an upper forming tool (12);
- laminating on the lower forming tool (11) a first set of superimposed layers (16) of curable, fibre-reinforced, thermosetting composite material in an uncured condition;
- laminating on the upper forming tool (12) a second set of superimposed layers (26) of curable, fibre-reinforced, thermosetting composite material in an uncured condition;
- providing a plurality of core segments (15a-15d), made from blocks (15') of closed-cell foam suitable for forming together the core (15) of the product;
- laying the core segments (15a-15d) adjacent to one another on said first set of layers (16) in at least a predetermined direction (x), where the core segments are oversized, when considered in a plane transverse to said predetermined direction, by a predetermined thickness with respect to the nominal size determined by the moulding cavity in the closed condition, minus the thickness of the first (16) and second (26) sets of composite layers;
- laying the upper forming tool (12) with the second set of layers (26) over the core segments (15a-15d), without closing completely the matched mould (10, 11, 12);
- initially applying a controlled temperature such as to allow the plastic deformation of the core segments (15a-15d), wherein the step of applying temperature includes a controlled heating step without applying pressure on the curing apparatus, until the temperature reaches a predetermined temperature not below 75% and not exceeding 100% of the softening point of the closed-cell foam material constituting the core segments (15a-15d);
- then applying temperature and pressure so as to cause the complete closure of the matched mould (10, 11, 12) and curing of the thermosetting resin matrix of the laminated layers (16, 26).

2. Method according to Claim 1, wherein the subsequent step of applying temperature and pressure includes the steps of:
- gradually applying pressure on the curing apparatus until the pressure reaches a predetermined pressure level, resulting in the complete closure of the matched mould, and
- upon reaching that predetermined pressure level, keeping that pressure substantially constant.

3. Method according to Claim 2, wherein the temperature is kept substantially constant during said steps where the pressure is gradually applied and then kept at the predetermined pressure level.

4. Method according to Claim 1, wherein the step of curing the thermosetting resin matrix of the laminated layers (16, 26) involves the application of constant pressure and temperature and wherein said curing step is followed by a final controlled cooling step until a temperature which corresponds to about two-thirds of the softening point of the foam constituting the core is reached.

5. Method according to any one of the preceding claims, wherein the thermosetting resin matrix of the laminated layers (16, 26) is chosen so as to have a gel time not less than 70% of the time it takes for the foam to reach the softening point, so as to prevent premature curing of the resin matrix.

6. Method according to claim 1, wherein the core segments are given the desired shape by cutting closed-cell foam blocks (15`).

7. Method according to Claim 6, wherein each block of foam is held between a pair of lateral templates (18a, 18b) which each reproduce the profile (19a, 19b) of one of the two respective ends of a core segment (15a-15d).

8. Method according to Claim 7, wherein the blocks (15') are cut by a wire (20) tensioned in a direction perpendicular to the templates and therefore in a direction substantially parallel to said predetermined direction (x).

9. Method according to Claim 6, wherein the cut is performed by a cutting machine having a tolerance less than the oversizing which is predetermined depending on the type of closed-cell foam constituting the core segments.

10. Method according to any one of the preceding claims, wherein the core segments (15a-15d) are laid on the lower forming tool (11), bringing it into contact with a part of the segments which has not been oversized or which has minimal oversizing compared to the other sides of the core segments.

11. Method according to any one of the preceding claims, wherein the oversizing of the core segments with respect to said nominal size is between about 0.2 mm and about 1.5 mm.

## Patentansprüche

1. Verfahren zur Herstellung eines Produkts mit einer Sandwichbauweise mit geschlossenem Abschnitt umfassend einen Kern (15) aus leichtgewichtigem Material, umhüllt von einer Schale aus Verbundstoff, das Verfahren umfassend die folgenden Schritte:
- Bereitstellen einer angepassten Form-Vernetzungs-Maschine (10), einen formenden Hohlraum definierend und mindestens ein unteres Formungswerkzeug (11) und mindestens ein oberes Formungswerkzeug (12) umfassend;
- Laminieren eines ersten Satzes von übereinanderliegenden Lagen (16) aus vernetzbarem, faserverstärktem, wärmeaushärtendem Verbundstoff in einem unvernetzten Zustand auf das untere Formungswerkzeug (11);
- Laminieren eines zweiten Satzes von übereinanderliegenden Lagen (26) aus vernetzbarem, faserverstärktem, wärmeaushärtendem Verbundstoff in einem unvernetzten Zustand auf das obere Formungswerkzeug (12);
- Bereitstellen einer Vielzahl von Kernsegmenten (15a-15d) hergestellt aus Blöcken (15') geschlossenzelligen Schaumstoffs, geeignet zur Zusammenbildung des Kerns (15) des Produkts;
- Legen der Kernsegmente (15a-15d) nebeneinander auf den ersten Satz von Lagen (16) in mindestens einer vorbestimmten Richtung (x), wobei die Kernsegmente überdimensioniert sind, wenn diese in einer Ebene quer zu der besagten vorbestimmten Richtung betrachtet werden, durch eine vorbestimmte Dicke in Bezug auf die nominale Größe, welche durch den formenden Hohlraum in dem geschlossenen Zustand bestimmt wird, abzüglich der Dicke des ersten (16) und zweiten (26) Satzes der Verbundschichten;
- Legen des oberen Formungswerkzeugs (12) mit dem zweiten Satz an Lagen (26) über die Kernsegmente (15a-15d), ohne die passende Form (10, 11, 12) vollständig abzuschließen;
- anfängliches Anlegen einer gesteuerten Temperatur, so dass eine plastische Verformung der Kernsegmente (15a-15d) ermöglicht wird, wobei der Schritt des Temperaturanlegens einen gesteuerten Heizschritt ohne Druckanlegen an der vernetzenden Maschine beinhaltet, bis die Temperatur eine vorbestimmte Temperatur nicht unterhalb 75% und nicht überschreitend 100% des Erweichungspunkts des geschlossenzelligen Schaumstoffmaterials, das die Kernsegmente (15a-15d) ausmacht, erreicht;
- dann Temperatur- und Druckanlegen, um die vollständige Abschließung der passenden Form (10, 11, 12) zu verursachen und Vernetzen der wärmeaushärtenden Kunstharzmatrix der geschichteten Lagen (16, 26).

2. Verfahren nach Anspruch 1, wobei der anschließende Schritt des Temperatur- und Druckanlegens die Schritte beinhaltet:
- schrittweises Druckanlegen an der vernetzenden Maschine bis der Druck ein vorbestimmtes Druckniveau erreicht hat, in einer vollständigen Abschließung der Form resultierend, und
- bei Erreichen dieses vorbestimmten Druckniveaus diesen Druck im Wesentlichen konstant haltend.

3. Verfahren nach Anspruch 2, wobei die Temperatur, während der besagten Schritte, wo der Druck schrittweise angelegt wird und dann bei einem vorbestimmten Druckniveau gehalten wird, im Wesentlichen konstant gehalten wird.

4. Verfahren nach Anspruch 1, wobei der Schritt der Vernetzung der wärmeaushärtenden Kunstharzmatrix der geschichteten Lagen (16, 26) das Anlegen eines konstanten Drucks und Temperatur beinhaltet, und wobei der Vernetzungsschritt von einem abschließenden gesteuerten Kühlungsschritt gefolgt wird, bis eine Temperatur erreicht wird, welche etwa zweidrittel des Erweichungspunkts des Schaumstoffs, welcher den Kern bildet, entspricht.

5. Verfahren nach einem der vorhergehenden Ansprüche, wobei die wärmeaushärtende Kunstharzmatrix der geschichteten Lagen (16, 26) so gewählt wird, dass man eine Gelzeit nicht weniger als 70% der Zeit, welche es den Schaumstoff zum Erreichen des Erweichungspunkts benötigt, aufweist, damit ein verfrühtes Vernetzen der Kunstharzmatrix verhindert wird.

6. Verfahren nach Anspruch 1, wobei den Kernsegmenten die gewünschte Form, durch schneiden von geschlossenzelligen Schaumstoffblöcken (15'), gegeben wird.

7. Verfahren nach Anspruch 6, wobei jeder Block aus Schaumstoff zwischen einem Paar lateraler Vorlagen (18a, 18b), welche jede das Profil (19a, 19b) eines der zwei entsprechenden Enden eines Kernsegments (15a-15d) wiedergeben, gehalten wird.

8. Verfahren nach Anspruch 7, wobei die Blöcke (15') durch einen Draht (20), welcher in einer Richtung senkrecht zu den Vorlagen und deshalb in eine Richtung im Wesentlichen parallel zu der vorbestimmten Richtung (x) gespannt ist, geschnitten werden.

9. Verfahren nach Anspruch 6, wobei der Schnitt durchgeführt wird mittels einer Schneidemaschine, mit einer Toleranz weniger als die Überdimensionierung, welche abhängig vom Typ des geschlossenzelligen Schaumstoffs aus welchem die Kernsegmente bestehen, vorbestimmt wird.

10. Verfahren nach einem der vorhergehenden Ansprüche, wobei die Kernsegmente (15a-15d) auf das untere Formungswerkzeug (11) gelegt werden, es mit einem Teil des Segments in Berührung bringen, welches nicht überdimensioniert wurde oder welches minimale Überdimensionierung, verglichen mit der anderen Seite des Kernsegments, aufweist.

11. Verfahren nach einem der vorhergehenden Ansprüche, wobei die Überdimensionierung der Kernsegmente in Bezug auf die genannte Nominalgröße zwischen etwa 0.2 mm und etwa 1.5 mm ist.

## Revendications

1. Procédé de fabrication d'un produit présentant une structure en sandwich à section fermée, comprenant un noyau (15) en matériau léger entouré d'une coque en matériau composite, le procédé comprenant les étapes suivantes :
- fournir un appareil de cuisson à moule et contre-moule (10) définissant une cavité de moulage et comprenant au moins un outil de forme inférieur (11) et au moins un outil de forme supérieur (12) ;
- superposer sur l'outil de forme inférieur (11) un premier ensemble de couches superposées (16) d'un matériau composite thermodurcissable renforcé par des fibres dans un état non polymérisé ;
- superposer sur l'outil de forme supérieur (12) un deuxième ensemble de couches superposées (26) d'un matériau composite thermodurcissable renforcé par des fibres dans un état non durci ;
- fournir une pluralité de segments de noyau (15a-15d), constitués de blocs (15') en mousse à cellules fermées, adaptés pour former ensemble le noyau (15) du produit ;
- placer les segments de noyau (15a-15d) adjacents les uns aux autres sur ledit premier ensemble de couches (16) dans au moins une direction prédéterminée (x), où les segments de noyau sont surdimensionnés, vus dans un plan transversal par rapport à ladite direction prédéterminée, d'une épaisseur prédéterminée par rapport à la taille nominale déterminée par la cavité de moulage dans l'état fermé, moins l'épaisseur des premier (16) et deuxième (26) ensembles de couches composites ;
- placer l'outil de forme supérieur (12) avec le deuxième ensemble de couches (26) sur les segments de noyau (15a-15d), sans fermer complètement le contre-moule (10, 11, 12) ;
- appliquer initialement une température régulée de manière à permettre la déformation plastique des segments de noyau (15a-15d), l'étape d'application de température comprenant une étape de chauffage régulé sans application de pression sur l'appareil de cuisson, jusqu'à ce que la température atteigne une température prédéterminée non inférieure à 75 % et ne dépassant pas 100 % du point de ramollissement du matériau de type mousse à cellules fermées qui constitue les segments de noyau (15a-15d) ;
- appliquer ensuite une température et une pression de manière à provoquer la fermeture complète du contre-moule (10, 11, 12) et le durcissement de la matrice de résine thermodurcissable des couches superposées (16, 26).

2. Procédé selon la revendication 1, dans lequel l'étape consécutive d'application d'une température et d'une pression comprend les étapes suivantes :
- appliquer progressivement une pression sur l'appareil de cuisson jusqu'à ce que la pression atteigne un niveau de pression prédéterminé, ayant pour conséquence la fermeture complète du contre-moule, et
- après avoir atteint ce niveau de pression prédéterminé, maintenir cette pression substantiellement constante.

3. Procédé selon la revendication 2, dans lequel la température est maintenue substantiellement constante pendant lesdites étapes où la pression est progressivement appliquée puis maintenue au niveau de pression prédéterminé.

4. Procédé selon la revendication 1, dans lequel l'étape de durcissement de la matrice de résine thermodurcissable des couches superposées (16, 26) implique l'application d'une pression et d'une température constantes et dans lequel ladite étape de durcissement est suivie d'une étape finale de refroidissement régulé jusqu'à ce qu'une température qui correspond environ aux deux tiers du point de ramollissement de la mousse qui constitue le noyau soit atteinte.

5. Procédé selon l'une quelconque des revendications précédentes, dans lequel la matrice de résine thermodurcissable des couches superposées (16, 26) est choisie de façon à avoir un temps de gélification non inférieur à 70 % du temps qu'il faut pour que la mousse atteigne le point de ramollissement, afin d'éviter un durcissement précoce de la matrice de résine.

6. Procédé selon la revendication 1, dans lequel on donne aux segments de noyau la forme souhaitée en coupant des blocs de mousse à cellules fermées (15').

7. Procédé selon la revendication 6, dans lequel chaque bloc de mousse est maintenu entre deux gabarits latéraux (18a, 18b) qui reproduisent chacun le profil (19a, 19b) de l'une des deux extrémités respectives d'un segment de noyau (15a-15d).

8. Procédé selon la revendication 7, dans lequel les blocs (15') sont coupés par un fil métallique (20) tendu dans une direction perpendiculaire aux gabarits et par conséquent dans une direction substantiellement parallèle à ladite direction prédéterminée (x).

9. Procédé selon la revendication 6, dans lequel la coupe est réalisée par une machine de coupe ayant une tolérance inférieure au surdimensionnement qui est prédéterminé en fonction du type de mousse à cellules fermées qui constitue les segments de noyau.

10. Procédé selon l'une quelconque des revendications précédentes, dans lequel les segments de noyau (15a-15d) sont déposés sur l'outil de forme inférieur (11), en le mettant en contact avec une partie des segments qui n'a pas été surdimensionnée ou qui a un surdimensionnement minimal comparé aux autres côtés des segments de noyau.

11. Procédé selon l'une quelconque des revendications précédentes, dans lequel le surdimensionnement des segments de noyau par rapport à ladite taille nominale vaut de 0,2 mm environ à 1,5 mm environ.
